# EUROPÄISCHE PATENTSCHRIFT

(11) **EP 0 945 304 B1**
(45) Veröffentlichungstag und Bekanntmachung des Hinweises auf die Patenterteilung: **23.05.2007**
(21) Anmeldenummer: 98123202.8
(22) Anmeldetag: 05.12.1998
(51) Int. Cl.: B60Q 1/42

(54) **Verfahren und Vorrichtung zur drehrichtungsgekoppelten Rückstellung eines Schalters**
Process and device for automatically returning a switch associated with the direction of rotation to a neutral position
Procédé et dispositif pour retourner automatiquement un interrupteur associé à la direction de rotation à une position neutre

(30) Priorität: 31.12.1997 DE 19758288
(43) Veröffentlichungstag der Anmeldung: 29.09.1999
(73) Patentinhaber: Valeo Schalter und Sensoren GmbH, 74321 Bietigheim-Bissingen (DE)
(72) Erfinder: Engelhardt, Martin, 74246 Eberstadt (DE); Klein, Rudolf, 74348 Lauffen a.N. (DE)
(74) Vertreter: Dreiss, Fuhlendorf, Steimle & Becker

(56) Entgegenhaltungen:
- DE-A- 2 528 681
- DE-A- 3 510 714
- DE-A- 4 226 506
- DE-C- 3 532 668
- DE-U- 8 112 331

## Beschreibung

Die vorliegende Erfindung betrifft ein Verfahren zur drehrichtungsgekoppelten Rückstellung eines mit einem drehbaren Stellglied zusammenwirkenden Schalters, der einen mit einer Lenksäule zusammenwirkenden Blinkerhebel in einem Kraftfahrzeug aufweist, sowie eine Vorrichtung zur Durchführung des Verfahrens.

Ein solches Verfahren und eine solche Vorrichtung sind aus DE 4 226 506 bekannt.

Blinkerhebel in einem Kraftfahrzeug können üblicherweise von einer Grundstellung in zwei verschiedene Betriebsstellungen geschwenkt werden, wobei jeweils eine Betriebsstellung einer Blinkstellung entspricht und die Blinkleuchten der zugeordneten Kraftfahrzeugseite einschaltet. Vorzugsweise ist hierbei der Blinkerhebel an der Lenksäule angeordnet und so montiert, daß die Blinkstellung mit der Drehbewegung des Lenkrades korrespondiert. Ist beispielsweise der Blinkerhebel auf der linken Seite des Lenkrades angeordnet, so wird der Blinkerhebel zum Einschalten der Blinkleuchten auf der rechten Fahrzeugseite nach oben in die Blinkstellung geschwenkt, da dieses der Drehrichtung des Lenkrades zum Durchfahren einer Rechtskurve entspricht. Umgekehrt wird das Lenkrad zum Durchfahren einer Linkskurve nach links gedreht, so daß hier der Blinkerhebel zum Einschalten der Blinkleuchten auf der linken Fahrzeugseite nach unten in die Blinkstellung geschwenkt wird.

Der Blinkerhebel bzw. Blinkerschalter ist nun meistens so ausgebildet, daß er bei Rückdrehung des Lenkrades in die entgegengesetzte Richtung aus der Blinkstellung in die Grundstellung zurückspringt, die Blinker auf der entsprechenden Fahrzeugseite also nach Beendigung der Kurvenfahrt und Rückführung des Kraftfahrzeuges in Geradeausfahrt automatisch ausgeschaltet werden. Bei einer Weiterdrehung des Lenkrades in Kurvenrichtung um mehr als eine Umdrehung sowie beim Rückdrehen des Lenkrades und gleichzeitigem Festhalten des Blinkerhebels in der Betriebsstellung darf der Blinkerhebel jedoch nicht zurückgestellt werden, wobei dies auch bei Lenkradumdrehungsgeschwindigkeiten von bis zu 120 Umdrehungen pro Minute sichergestellt werden muß.

Üblicherweise ist der Blinkerhebel um einen Drehpunkt schwenkbar und weist an einem Ende ein in der Hebelachse elastisch gelagertes Schaltstück auf. Mit diesem Schaltstück gleitet der Blinkerhebel beim Schwenken von der Grundstellung in die Blinkstellung und umgekehrt entlang einer Kulisse. Die Kulisse weist in ihrer Kontur einen vertieften Bereich auf, der der Grundstellung des Blinkerhebels entspricht, sowie zwei symmetrisch zu diesem vertieften Bereich angeordnete rampenförmige Bereiche, an deren Ende jeweils eine erhöhte Rastung angeordnet ist, die einer Blinkstellung entspricht. Beim Schwenken des Blinkerhebels von der Grundstellung in eine Blinkstellung gleitet der Blinkerhebel mit seinem Schaltstück entlang der Kulissenkontur und wird über die erhöhte Rastung gedrückt, an der er in der Blinkstellung gehalten wird. Bei der oben erwähnten Rückstellung des Blinkerhebels wird eine Kraft seitlich auf den Blinkerhebel aufgebracht, die das Schaltstück über die erhöhte Rastung zurückdrückt, so daß das Schaltstück und damit der Blinkerhebel entlang der Kulissenkontur zurück in die Grundstellung gleitet.

Dieses bekannte Verfahren zum Rückstellen des Blinkerhebels weist jedoch eine Reihe von Nachteilen auf, da zum Beispiel die Rückstellkraft bei Rückdrehung des Lenkrades immer auf den Blinkerhebel einwirkt und folglich ein Blockierschutz vorgesehen werden muß, damit bei in der Blinkstellung gehaltenem Blinkerhebel kein Teil beschädigt wird oder bricht. Der Blockierschutz ist meist als ein unter Federvorspannkraft stehender Anschlag ausgebildet, bei dessen Betätigung in Folge der hohen Kräfte laute und störende Geräusche entstehen. Zudem ist die auf den Blinkerhebel einwirkende Rückstellkraft abhängig von der Drehgeschwindigkeit des Lenkrades und wird höher, je schneller das Lenkrad gedreht wird, so daß die Umdrehungsgeschwindigkeit des Lenkrades das Rückstellverhalten beeinflußt. So kann der Blinkerhebel mit steigender Umdrehungsgeschwindigkeit des Lenkrades so viel Energie erhalten, daß er bei der Rückstellung die Grundstellung überspringt und Schwingbewegungen um die Grundstellung herum vollführt, was zu Rattergeräuschen führen kann. Bei weiter steigender Umdrehungsgeschwindigkeit kann es sogar zu einem elektrischen Kontakt in der gegenüberliegenden Blinkstellung und im Extremfall sogar zu einem Einrasten dort kommen. Schließlich ist auch bei hohen Umdrehungsgeschwindigkeiten des Lenkrades eine Aktivierung der Blockiersicherung möglich, so daß bei einer schnellen Drehung des Lenkrades in die entgegengesetzte Drehrichtung keine Rückstellung des Blinkerhebels erfolgt. Zudem kann auch das an der Lenksäule angeordnete Betätigungselement, welches die Rückstellkraft in die Rückstellvorrichtung einleitet, durch hohe Rückstellkräfte verformt oder beschädigt werden, was sich nachteilig auf die Rückstellung des Blinkerhebels auswirkt.

Vor diesem Hintergrund ist es daher Aufgabe der vorliegenden Erfindung, ein Verfahren sowie eine Vorrichtung zur Verfügung zu stellen, welches bzw. die die oben beschriebenen Nachteile vermeidet.

Gelöst wird diese Aufgabe durch ein Verfahren zur drehrichtungsgekoppelten Rückstellung eines mit einem drehbaren Stellglied zusammenwirkenden Schalters, der einen mit einer Lenksäule zusammenwirkenden Blinkerhebel in einem Kraftfahrzeug aufweist, bei dem der Blinkerhebel um eine Drehachse aus der Grundstellung in eine Betriebsstellung geschwenkt wird, und dabei mit einem Ende entlang einer Kulisse gleitet und an einer über die Kulissenkontur hervorstehenden Rastung durch diese in der Betriebsstellung gehalten wird, wobei die Rastung zum Zurückstellen des Blinkerhebels so bewegt wird, daß sie mindestens bündig mit der Kulissenkontur abschließt und den Blinkerhebel freigibt.

Damit wird ein Verfahren zur Rückstellung zur Verfügung gestellt, das wesentlich geringere Kräfte zur Rückstellung des Blinkerhebels aus der Blinkstellung in die Grundstellung benötigt. Dieses resultiert aus der Tatsache, daß die Kräfte zum Zurückziehen der Rastung wesentlich geringer sind als die Kräfte, die benötigt werden, um den Blinkerhebel über die Rastung zu drücken. Zudem werden hier keine Rückstellkräfte auf den Blinkerhebel selbst aufgebracht, so daß auch kein Blockierschutz erforderlich ist, der bei festgehaltenem Blinkerhebel die auf diesen einwirkenden Rückstellkräfte kompensiert. Der Blinkerhebel ist damit weniger belastet, da weder Rückstellkräfte auf ihn einwirken noch Energie von der Drehbewegung des Lenkrades auf ihn übergeleitet wird. Die Rückstellung des Blinkerhebels erfolgt hier einfach durch Zurückziehen der Rastung, so daß die Rückstellgeschwindigkeit des Blinkerhebels, mit der er entlang der Kulissenkontur zurück in die Grundstellung gleitet, immer gleich groß und unabhängig von der Drehgeschwindigkeit des Lenkrades ist. Eine nach dem erfindungsgemäßen Verfahren arbeitende Vorrichtung kann folglich einfacher und leichter ausgebildet werden und weist dennoch aufgrund der geringeren Kraftbelastung eine höhere Lebensdauer auf.

Obgleich die Rastung zum Zurückstellen des Blinkerhebels auf beliebige Weise bewegt werden kann, ist es doch von Vorteil, wenn beim Schwenken des Blinkerhebels in die Betriebsstellung ein Nocken aus einer Ruhelage in Richtung auf die Lenksäule verschoben wird und dieser verschobene Nocken gemäß einer bevorzugten Ausführungsform mit einem an der Lenksäule angeordneten Betätigungselement zusammenwirkt und bei einer der Schwenkrichtung des Blinkerhebels entgegengerichteten Drehbewegung der Lenksäule einen die Rastung in der Raststellung haltenden Stützarm aus der Stützstellung bewegt, so daß die Rastung bewegt und der Blinkerhebel freigegeben werden kann, um zurück in die Grundstellung zu gelangen.

Damit ist auf einfache Weise eine Bewegung der Rastung möglich, an welcher der Blinkerhebel in der Blinkstellung gehalten wird, zumal wenn gemäß einer weiteren bevorzugten Ausführungsform am zur Kulisse gerichteten Ende des Blinkerhebels eine in dessen Längsachse wirkende Kraft erzeugt wird, die die Rastung bei wegbewegtem Stützarm mindestens bündig auf die Kulissenkontur drückt, so daß der Blinkerhebel freigegeben wird, und den Blinkerhebel entlang der Kulissenkontur in die Grundstellung bewegt.

Damit wird im Blinkerhebel selbst die erforderliche Rückstellkraft zum Zurückstellen in die Grundstellung erzeugt, die durch Wegziehen der Rastung zur Wirkung kommt und den Blinkerhebel entlang der Kulissenkontur zurück in die Grundstellung führt. Von außen auf den Blinkerhebel einwirkende Rückstellkräfte sind daher nicht erforderlich, wie oben schon ausführlich erläutert, so daß die Kraftbelastung des Blinkerhebels erheblich reduziert ist und dessen Lebensdauer folglich deutlich verlängert wird.

Vorrichtungsmäßig wird die Aufgabe gelöst durch eine Vorrichtung zur drehrichtungsgekoppelten Rückstellung eines mit einem drehbaren Stellglied zusammenwirkenden Schalters, insbesondere eines mit einer Lenksäule zusammenwirkenden Blinkerhebels in einem Kraftfahrzeug, mit einem um eine Drehachse schwenkbaren Blinkerhebel, wobei der Blinkerhebel jeweils in eine von zwei, der gewünschten Blinkstellung entsprechende Betriebsstellung schwenkbar ist, einer ortsfest angeordneten Kulisse zur Führung des Blinkerhebelendes und zwei auf einem Rastelement angeordneten Rastungen, die über die Kulissenkontur hervorstehen und jeweils das Blinkerhebelende in einer Betriebsstellung halten, wobei das Rastelement bewegbar ist, so daß jeweils eine Rastung zumindest bündig mit der Kulissenkontor abschließt und den in der Betriebsstellung gehaltenen Blinkerhebel freisetzt.

Damit wird eine Vorrichtung zur drehrichtungsgekoppelten Rückstellung zur Verfügung gestellt, die nur einer geringen Kraftbelastung ausgesetzt ist, da eine Bewegung der Rastung bzw. des Rastelementes mit wesentlich geringeren Kräften möglich ist, als sie zum Drücken des Blinkerhebelendes über die Rastung hinweg erforderlich sind. Derartige, von außen auf den Blinkerhebel einwirkende Rückstellkräfte werden hier nicht erzeugt, so daß auch kein Blockierschutz zum Kompensieren derartiger Rückstellkräfte bei festgehaltenem Blinkerhebel erforderlich ist. Die Vorrichtung kann somit einfacher, leichter und folglich kostengünstiger ausgeführt werden und weist dennoch aufgrund der geringeren Kraftbelastung eine höhere Lebensdauer auf, zumal auch keine Energie von der Drehbewegung des Lenkrades auf den Blinkerhebel übergeht und dessen Rückstellgeschwindigkeit weiterhin unabhängig von der Umdrehungsgeschwindigkeit des Lenkrades ist.

Wenngleich das Rastelement beliebig bewegbar angeordnet werden kann, sofern die darauf angeordneten Rastungen zum Freigeben des Blinkerhebels aus der Betriebsstellung auf die Kulissenkontur zurückgezogen werden können, ist es doch vorteilhaft, wenn das Rastelement drehbeweglich angeordnet ist.

Damit kann zum einen das Rastelement einfach und unkompliziert bewegt und die Rastungen zur Kulissenkontur zurückgezogen werden, um den Blinkerhebel aus der Blinkstellung freizugeben. Zum anderen kann das Rastelement dann einfach und ohne großen Aufwand in der Raststellung gehalten werden, in welcher die Rastungen jeweils den Blinkerhebel in der Blinkstellung halten, insbesondere wenn zwei elastische Stützarme gemäß einer bevorzugten Ausführungsform symmetrisch zum Drehpunkt angeordnet sind und das Rastelement in der Raststellung halten. Die erforderliche Elastizität der Stützarme kann dabei beispielsweise durch eine entsprechende Materialauswahl eines elastischen Materials, beispielsweise eines Kunststoffes, aber auch durch übliche Federn realisiert werden. Der Begriff "elastische Stützarme" umfaßt daher hier auch Stützarme, die an sich starr ausgebildet sind und lediglich durch Federn elastisch gelagert werden. Die Stützarme können hierbei beliebig ausgebildet sein, beispielsweise einteilig oder auch einstückig mit der Kulisse, aber auch mehrteilig oder mit unterschiedlich ausgebildeten Bereichen, die entweder starr zum Halten des Rastelementes ausgebildet sind oder elastisch, um den Stützarm bewegbar zu machen, wobei dieses beispielsweise durch unterschiedlich gestaltete Querschnittsformen erzielt werden kann. Bei allen Gestaltungen der Stützarme, von denen hier beispielhaft einige erwähnt wurden, muß jedoch darauf geachtet werden, daß diese ihre Funktion sicher erfüllen können, die zum einen darin besteht, das Rastelement sicher in der Raststellung zu halten, und zum anderen darin, die oben beschriebene Bewegung des Rastelementes bei der Rückstellung des Blinkerhebels zu ermöglichen.

Auch wenn das Rastelement mittels beliebiger Mittel bewegt werden kann, weist die Vorrichtung gemäß einer weiteren bevorzugten Ausführungsform hierzu mindesten einen Nocken auf, der beim Schwenken des Blinkerhebels von der Grundstellung in eine Betriebsstellung in Richtung auf die Lenksäule bewegbar ist. Der Nocken, der vorteilhafterweise elastisch und/oder drehbeweglich gelagert ist, wirkt bei einer Betätigung auf die Stützarme ein und bewegt diese aus der Stützstellung, so daß das Rastelement und damit die Rastungen zur Freigabe des Blinkerhebels bewegt werden kann. Die elastische Lagerung des Nockens kann hierbei beliebig realisiert werden, beispielsweise durch Federn oder auch Materialelastizität.

Obgleich die Betätigung des Nockens beliebig erfolgen kann, ist es doch von Vorteil, wenn die Betätigung des Nockens direkt mit der Drehung der Lenksäule gekoppelt ist, so daß gemäß einer weiteren bevorzugten Ausführungsform an der Lenksäule mindestens ein Betätigungselement angeordnet ist, wobei das Betätigungselement mit dem Nocken zusammenwirkt. Das Betätigungselement kann dabei als an der Lenksäule angeordneter Vorsprung oder als dort angeordnete Ausnehmung ausgebildet sein, sofern es mit dem ausgefahrenen Nocken zusammenwirkt. Beispielsweise kann das Betätigungselement als kreissegmentförmiger Vorsprung ausgebildet sein, dessen Öffnungswinkel den Lenkraddrehbereich bestimmt, in dem die Rückstellung aktiviert wird. Ebenso kann das Betätigungselement beispielsweise aus zwei am Umfang der Lenksäule angeordneten Ausnehmungen bestehen, wobei der zwischen ihnen liegende Bereich dem vorher beschriebenen kreisbogenförmigen Segment entspricht und den Aktivierungswinkel der Rückstellvorrichtung festlegt.

Das Betätigungselement betätigt bei einer Drehung der Lenksäule mit seinen Kanten den ausgefahrenen Nocken, der bei drehbeweglich gelagertem Rastelement zentrisch zu diesem angeordnet ist. Der Nocken wird dabei geschwenkt und bewegt einen Stützarm aus der Stützstellung, wobei hier der Nocken jeweils den gegen die Drehrichtung weisenden Stützarm gegen die Drehrichtung bewegt und aus der Stützlage bringt, so daß das Rastelement aus der Raststellung bewegt werden kann. Statt einem Nocken, der je nach Drehrichtung der Lenksäule einen der beiden Stützarme aus der Stützstellung bewegt, können auch zwei Nocken vorgesehen sein, die dann symmetrisch zum Drehpunkt des Rastelementes angeordnet sind und jeweils nur einen Stützarm abhängig von der Drehrichtung der Lenksäule aus der Stützstellung bewegen. Dabei wird abhängig von der Blinkstellung des Blinkerhebels nur der dieser Betriebsstellung zugeordnete Nocken in Richtung auf die Lenksäule bewegt, so daß nur dieser Nocken mit dem auf der Lenksäule angeordneten Betätigungselement zusammenwirkt und bei einer Richtungsumkehr der Lenksäule die Rückstellung des Blinkerhebels in der oben beschriebenen Weise bewirkt.

Das Rastelement kann bei aus der Stützstellung bewegtem Stützarm beliebig aus der Raststellung bewegt werden. Vorteilhaft ist es jedoch, wenn am zur Kulisse gerichteten Ende des Blinkerhebels eine in der Längsachse des Blinkerhebels wirkende Kraftkomponente erzeugt wird, die das Rastelement dann aus der Raststellung bewegt und so die Rückstellung des Blinkerhebels in die Grundstellung ermöglicht. Daher ist gemäß einer bevorzugten Ausführungsform am zur Kulisse gerichteten Ende des Blinkerhebels ein elastisch gelagertes Schaltstück angeordnet. Dieses erzeugt die beschriebene Kraftkomponente, wobei die erforderliche Elastizität beispielsweise durch eine separate Feder oder die dem Material bei der entsprechenden Materialauswahl innewohnende Elastizität realisiert werden kann.

Die Erfindung wird nun nachfolgend unter Bezugnahme auf die beigefügte Zeichnung näher erläutert. Dabei zeigt:
- Figur 1: ein erstes Ausführungsbeispiel der Rückstellvorrichtung im Teilschnitt mit dem in Blinkstellung eingerasteten Blinkerhebel,
- Figur 2: das Ausführungsbeispiel der Figur 1 mit ausgefahrenem Nocken,
- Figur 3: das Ausführungsbeispiel der Figuren 1 und 2 mit dem durch das Betätigungselement betätigten Nocken,
- Figur 4: ein zweites Ausführungsbeispiel im Teilschnitt mit Blinkerhebel in Grundstellung,
- Figur 5: ein drittes Ausführungsbeispiel im Teilschnitt mit jeweils unterschiedlich gestalteten Stützarmen,
- Figur 6: ein viertes Ausführungsbeispiel mit starren Stützarmen,
- Figur 7: ein fünftes Ausführungsbeispiel mit zwei Nocken und dem Blinkerhebel in Grundstellung,
- Figur 8: das Ausführungsbeispiel der Figur 7 mit dem Blinkerhebel in Blinkstellung,
- Figur 9: das Ausführungsbeispiel der Figuren 7 und 8 mit durch das Betätigungselement betätigtem Nocken, und
- Figur 10: ein sechstes Ausführungsbeispiel mit zwei Nocken.

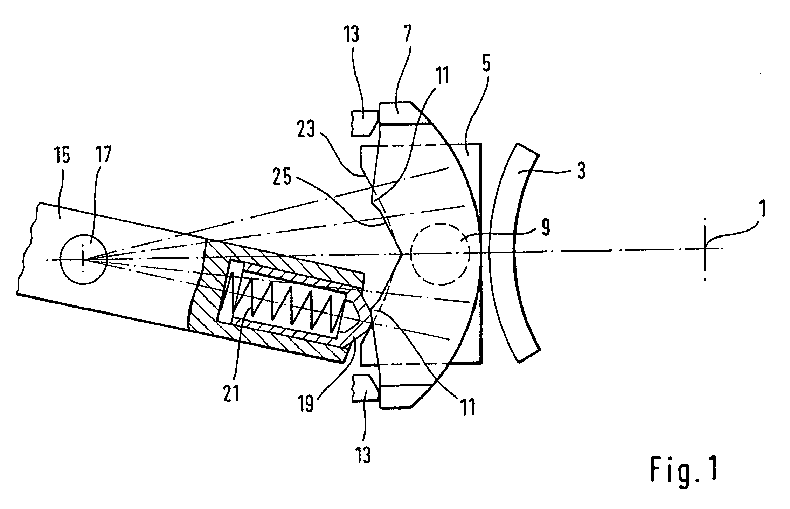

Figur 1 zeigt in Draufsicht ein erstes Ausführungsbeispiel in einem Teilschnitt. Dargestellt ist die Lenksäulenachse 1 mit dem daran angeordneten Betätigungselement 3, sowie die ortsfeste Kulisse 5 mit dem zugeordneten Rastelement 7, welches an der Achse 9 drehbeweglich gelagert ist und zwei Rastungen 11 aufweist. Weiterhin sind die Spitzen von zwei Stützarmen 13 dargestellt, sowie ein Blinkerhebel 15, der an der Achse 17 drehbeweglich gelagert ist und an seinem zur Kulisse 5 weisenden Ende ein Schaltstück 19 aufweist, welches mittels einer Feder 21 im Blinkerhebel 15 elastisch gelagert ist.

Der Blinkerhebel 15 ist hier in einer von zwei Raststellungen bzw. Blinkstellungen dargestellt. Hierzu wird er um die Achse 17 verschwenkt, bis er mit seinem mittels der Feder 21 elastisch gelagerten Schaltstück 19 an der Rastung 11 einrastet, wobei die Schwenkbewegung des Blinkerhebels 15 in beide Richtungen durch einen jeweils nicht dargestellten Anschlag begrenzt wird. Beim Verschwenken des Blinkerhebels 15 aus der Grundstellung, in welcher er auf einer Linie zwischen den Mittelpunkten der Achse 17 und der Lenksäulenachse 1 liegt, gleitet das Schaltstück 19 entlang der Kulissenkontur 23 bzw. der Rastelementkontur 25, bis es über die Rastung 11 hinweggleitet und hinter dieser einrastet. Die hierzu erforderliche Elastizität bzw. Beweglichkeit des Schaltstückes 19 wird beim hier dargestellten Ausführungsbeispiel mittels der Feder 21 erzielt, kann jedoch beispielsweise auch durch Materialelastizität bei einer entsprechenden Materialauswahl erzielt werden, sofern damit eine in Längsrichtung des Blinkerhebels 15 wirkende Kraftkomponente realisiert werden kann.

Um nun zu verhindern, daß diese Kraftkomponente, die sowohl für die Rastung des Blinkerhebels als auch für dessen Rückstellung erforderlich ist, das an der Achse 9 beweglich gelagerte Rastelement 7 aus der dargestellten Raststellung weqdreht, wird das Rastelement 7 an seinen beiden Enden jeweils mit einem Stützarm 13 in der Raststellung gehalten. Der jeweils am anderen Ende des Rastelementes 7 anliegende Stützarm 13 hält dabei das Kräftegleichgewicht mit der auf die Rastung 11 einwirkenden Kraftkomponente des Schaltstückes 19, so daß diese das Rastelement 7 nicht aus der Raststellung wegdrehen kann.

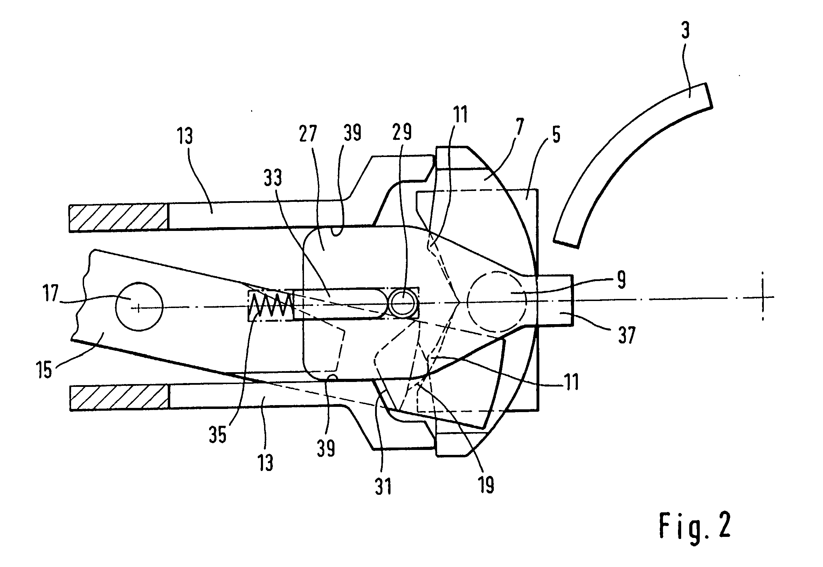

In Figur 2 ist die Vorrichtung der Figur 1 mit vollständig dargestellten Stützarmen 13 sowie zusätzlich einem Nocken 27 dargestellt, wobei weiterhin durch Drehen der Lenksäule das Betätigungselement 3 weiterbewegt wurde. Der Nocken 27 weist einen sich beidseitig erstreckenden Zapfen 29 auf, der zum einen in einer oberhalb des Nockens 27 im nicht dargestellten Gehäuse vorgesehenen Führungskammer geführt ist, und zum anderen durch eine im unterhalb des Nockens 27 angeordneten Blinkerhebel 15 Vorgesehene Steuerkontur 31 geführt wird. Auf den Zapfen 29 drückt eine Hülse 33, die mittels der Feder 35 im nicht dargestellten Gehäuse elastisch gelagert ist und eine in Richtung des Lenksäulenzentrums 1 wirkende Kraftkomponente erzeugt.

Beim Verschwenken des Blinkerhebels 15 aus der Grundstellung in die dargestellte Blinkstellung wird gleichzeitig der Nocken 27 in Richtung auf die nicht dargestellte Lenksäule bewegt, da die durch die Hülse 33 bzw. die Feder 35 erzeugt Kraftkomponente den Zapfen 29 entlang der Steuerkontur 31 des Blinkerhebels 15 bewegt. Hierbei tritt der Nocken 27 mit seiner Spitze 37 über die Kontur der Kulisse 5 in Richtung auf die nicht dargestellte Lenksäule hervor und gelangt dabei in den Drehbereich des Betätigungselementes 3, wobei die Bewegung des Nockens 27 in diese Richtung durch den in der nicht dargestellten Führungskammer geführten Zapfen 29 begrenzt wird. Damit bleibt der Nocken 27 mit seinen Flanken 39 im Anlagekontakt mit den Stützarmen 13.

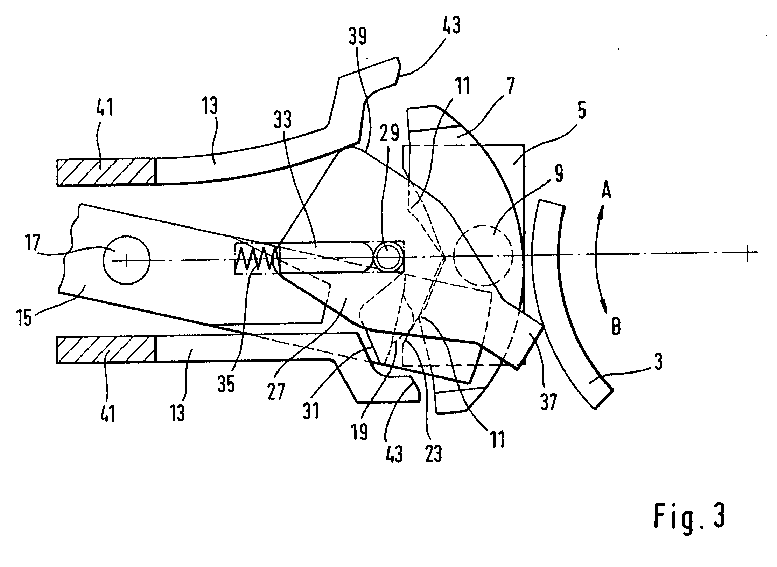

Die Spitze 37 des Nockens 27, die beim Vorschieben des Nockens 27 in den Wirkbereich des Betätigungselementes 3 gelangt, wird beim Drehen der Lenksäule und damit Bewegen des Betätigungselementes 3 von diesem erfaßt und mitbewegt, wie der Figur 3 zu entnehmen ist. Anzumerken ist an dieser Stelle, daß der Nocken 27 nur dann in Richtung auf die nicht dargestellte Lenksäule verschoben werden kann, wenn das hier als Kreisbogensegment ausgebildete Betätigungselement 3 sich nicht vor der Vorrichtung befindet und durch Drehen der Lenksäule von dieser wegbewegt wurde. Anderenfalls wird das Ausschieben des Nockens 27 durch das Betätigungselement 3 verhindert, wobei dieser Drehbereich der Lenksäule und umgekehrt der Arbeitsbereich der Rückstellvorrichtung durch den Öffnungswinkel des kreisbogenförmigen Segmentstückes 3 bestimmt wird.

Die Rückstellung des Blinkerhebels 15 aus der Blinkstellung in die Grundstellung erfolgt nun wie nachfolgend beschrieben. Der ausgeschobene Nocken 27 wird an seiner Spitze 37 vom Betätigungselement 3 erfaßt und von diesem beim Weiterdrehen der Lenksäule und damit des Betätigungselements 3 um den Zapfen 29 herumgeschwenkt, wie in Figur 3 dargestellt. Hier wird das Betätigungselement 3 in Richtung des Pfeiles B verdreht und folglich die Nockenspitze 37 ebenfalls in diese Richtung verschwenkt.

Damit wird jedoch gleichzeitig die am gegen die Drehrichtung gerichteten Stützarm 13 anliegende Flanke 39 des Nockens 27 in die entgegengesetzte Richtung geschwenkt, also in Richtung des Pfeils A. Das hat zu Folge, daß dieser Stützarm 13 ebenfalls gegen die Drehrichtung in Richtung des Pfeiles A verbogen wird, da er nur im Bereich 41 am nicht dargestellten Gehäuse befestigt ist und im übrigen Bereich freiliegt und durch die entsprechende Querschnittgestaltung und Materialauswahl elastisch genug ist, um wegzufedern. Damit wird jedoch auch die Spitze dieses Stützarmes 13 aus der Anlage mit dem Rastelement 7 und damit aus der Stützstellung gebracht, so daß die vom Schaltstück 19 auf das Rastelement 7 einwirkende Kraft das Rastelement 7 um die Achse 9 herumdrehen kann. Als Folge wird die Rastung 11, die den höchsten Punkt der Rastelementekontur 25 bildet, bis auf die Kulissenkontur 23 der Kulisse 5 zurückgedrückt, so daß das Schaltstück 19 und damit der Blinkerhebel 15 nicht mehr an der Rastung 11 gehalten werden und entlang der Kulissenkontur 23 in die Grundstellung zurücklaufen. Durch die im wesentlichen v-förmig zusammenlaufende Kontur wird der Blinkerhebel 15 dabei symmetrisch zur oben beschriebenen Grundstellung ausgerichtet. Gleichzeitig wird der Nocken 27 durch den Zapfen 29, der entlang der Steuerkontur 31 des Blinkerhebels 15 geführt wird, zurückgezogen. Hierbei wird der Nocken 27 gleichzeitig durch die Federwirkung des Stützarmes 13, der an der Flanke 39 des Nockens 27 anliegt, in die Ausgangsstellung bzw. Grundstellung zurückgedreht. Da außerdem das Rastelement 7 wegen der im wesentlichen ebenfalls v-förmig und symmetrisch ausgebildeten Rastelementkontur 25 durch den in der Grundstellung befindlichen Blinkerhebel 15 symmetrisch zu diesem ausgerichtet wird, kann der Stützarm 13 vollständig zurückfedern und wieder zur Anlage am Rastelement 7 kommen. Hierbei wird durch die an den Enden der Stützarme 13 vorgesehenen Führungsschrägen 43 ebenfalls die symmetrische Ausrichtung des Rastelementes 7 unterstützt.

Der Blinkerhebel 15 befindet sich nun wieder in der Grundstellung und kann von dort für eine erneute Blinkerbetätigung in eine der beiden Raststellungen geschwenkt werden.

Sollte der Fahrer den Blinkerhebel 15 in der in Figur 3 gezeigten Stellung halten wollen, weil er keine Rückstellung wünscht, so kann er dies einfach durch Festhalten des Blinkerhebels 15 erreichen. Er muß dabei keine auf den Blinkerhebel 15 einwirkenden Rückstellkräfte kompensieren, da hier die Rückstellung, wie ausführlich beschrieben, allein durch Zurückziehen der Rastung 11 erfolgt. Durch Weiterdrehen des Lenkrades oder auch Zurückdrehen gelangt dann die Spitze 37 des Nockens 27 wieder außer Eingriff mit dem Betätigungselement 3, so daß der Nocken 27 aufgrund der Federkraft der Stützarme 13, wie ausführlich beschrieben, wieder in seine Ausgangsstellung zurückgedreht wird und die Stützarme 13 wieder in die Stützstellung gelangen und das Rastelement 11 in der beschriebenen Raststellung halten. Der Fahrer kann den Blinkerhebel 15 dann wieder loslassen, da er wieder in der Raststellung gehalten wird.

Sollte das Lenkrad und damit das Betätigungselement 3 bei der in Figur 3 gezeigten Raststellung des Blinkerhebels 15 in die durch den Pfeil A gekennzeichnete Richtung gedreht werden, würde der Nocken 27 in der ausführlich beschriebenen Weise den unteren Stützarm 13 wegdrücken. Das Rastelement 7 würde dadurch jedoch nicht aus der Raststellung weggeschwenkt werden können, da die vom Schaltstück 19 in das Rastelement 7 eingeleitete Kraft vom oberen Stützarm 13 aufgenommen wird, der untere Stützarm 13 also nicht mit Stützwirkung versehen ist. Bei Weiterdrehen des Betätigungselementes 3 würde der Nocken 27 wieder außer Eingriff mit diesem gelangen und aufgrund der Federwirkung des unteren Stützarmes 13 wieder in seine Ausgangsstellung gedreht werden, wobei gleichzeitig auch der untere Stützarm 13 vollständig zurückfedert. Bei einer mit der Drehrichtung des Lenkrades korrespondierenden Blinkstellung des Blinkerhebels 15 wird die Rückstellung folglich in der beschriebenen Weise überbrückt.

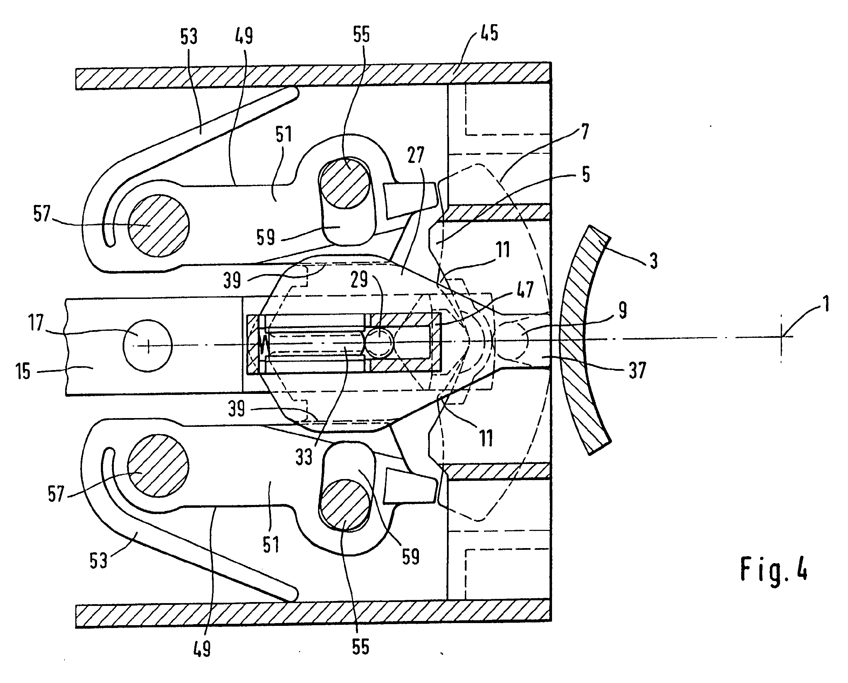

In Figur 4 ist ein zweites Ausführungsbeispiel in einem Teilschnitt dargestellt, wobei gleiche Teile mit dem gleichen Bezugszeichen versehen sind. Dieses zweite Ausführungsbeispiel unterscheidet sich von dem ersten Ausführungsbeispiel, welches unter Bezugnahme auf die Figuren 1 bis 3 ausführlich erläutert wurde, lediglich in der anderen Ausbildung der Stützarme 49. Im übrigen entspricht die Funktionsweise dieses Ausführungsbeispieles der oben beschriebenen und wird nicht erneut erläutert.

Die Stützarme 49 dieses zweiten Ausführungsbeispieles sind im Gegensatz zu den Stützarmen 13 des ersten Ausführungsbeispieles nicht einstückig mit dem Gehäuse ausgebildet, sondern jeweils als separate Bauteile. Sie weisen jeweils einen starren Abschnitt 51 auf, der das Rastelement 7 in der Raststellung hält und an einer Achse 57 drehbeweglich am Gehäuse 45 gelagert ist. Die Drehbewegung des starren Abschnittes 51 wird durch eine Führung 55 begrenzt, die ebenfalls fest mit dem Gehäuse 45 verbunden ist und in eine am starren Abschnitt 51 vorgesehene Führungsnut 59 eingreift. Weiterhin weist der Stützarm 59 einen elastischen Abschnitt 53 auf, der an einem Ende fest mit dem starren Abschnitt 51 verbunden ist und mit dem anderen Ende am Gehäuse 45 anliegt und sich an diesem abstützt. Wie der Figur 4 zu entnehmen ist, ist der elastische Abschnitt 53 dabei im wesentlichen so angeordnet, daß er bei einer Auslenkung des starren Abschnittes 51 durch den Nocken 27 umgebogen wird und so im Stützarm 49 eine rückstellende Federkraft erzeugt.

In der in Figur 4 gewählten Darstellung ist schließlich auch die Führungskammer 47 zu erkennen, die am Gehäuse 45 angeordnet ist und in welcher der Zapfen 29 des Nockens 27 geführt wird. Wie weiter oben ausführlich beschrieben wurde, drückt die gefederte Hülse 33 auf den Zapfen 29, so daß bei einer Verschwenkung des Blinkerhebels 15 aus der hier dargestellten Grundstellung in eine Blinkstellung der Nocken 27 verschoben wird und seine Spitze 37 aus dem Gehäuse 45 herausragt und in den Wirkbereich des Betätigungselementes 3 gelangt.

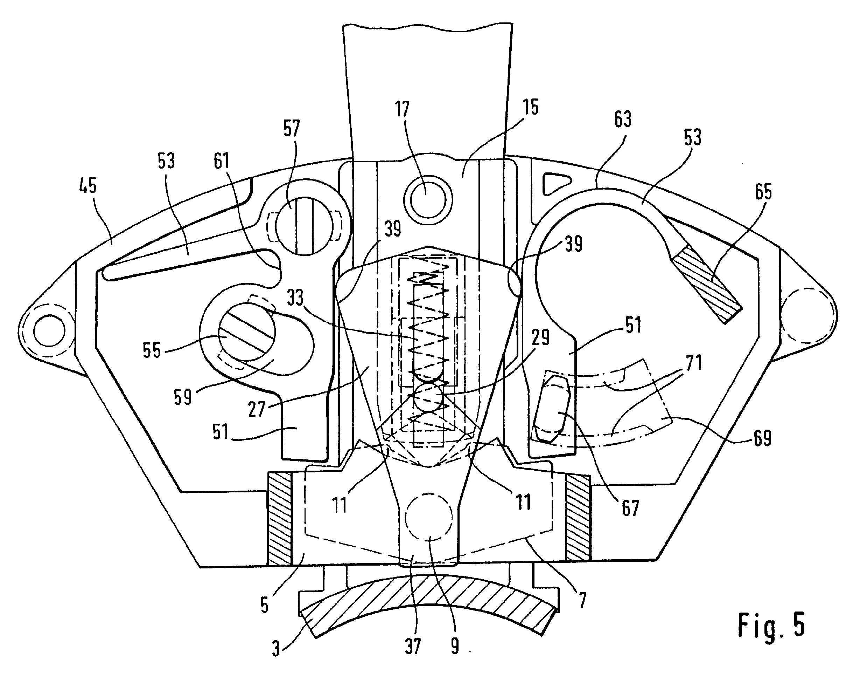

In Figur 5 ist ein drittes Ausführungsbeispiel im Teilschnitt mit dem Blinkerhebel 15 in Grundstellung dargestellt. Dieses Ausführungsbeispiel zeigt weitere Möglichkeiten zur Gestaltung der Stützarme, wobei wiederum gleiche Teile mit den gleichen Bezugszeichen gekennzeichnet werden. Dabei entspricht der auf der linken Seite dargestellte Stützarm 61 im wesentlichen den unter Bezugnahme auf die Figur 4 erläuterten Stützarmen 49, hier ist lediglich der elastische Abschnitt 53 etwas anders geführt. Der auf der rechten Seite dargestellte Stützarm 63 weist ebenfalls einen starren Abschnitt 51 auf, der das Rastelement 7 in der Raststellung hält, sowie einen mit dem starren Abschnitt 51 verbundenen elastischen Abschnitt 53. Der elastische Abschnitt 53 ist hier jedoch an seinem Ende 65 direkt mit dem Gehäuse 45 verbunden, beispielsweise angeklebt oder angegossen, und der starre Abschnitt 51 weist eine vorspringende Führung 67 auf, die in einer im Gehäuse 45 angeordneten Ausnehmung 69 geführt ist und die Drehbewegung des Stützarms 63 begrenzt. Dabei ist die Führung 67 hakenförmig ausgebildet und hintergreift die in der Führung 69 angeordneten Führungsschienen 71, die Führung 67 und damit der starre Abschnitt 51 des Stützarms 63 werden folglich in die im Deckel des Gehäuses 45 über dem Stützarm 63 vorgesehene Ausnehmung 69 eingehängt.

Obgleich hier in einer Vorrichtung zwei verschiedene Stützarme 61 bzw. 63 dargestellt sind, womit lediglich die vielfältigen Ausbildungsmöglichkeiten der Stützarme angedeutet werden sollen, werden in einer Vorrichtung vorteilhafterweise zur Gewährleistung einer sicheren Funktion gleichartig ausgebildete Stützarme verwendet. Im übrigen entspricht die Funktion dieser dargestellten Vorrichtung der unter Bezugnahme auf die vorherigen Ausführungsbeispiele ausführlich erläuterten.

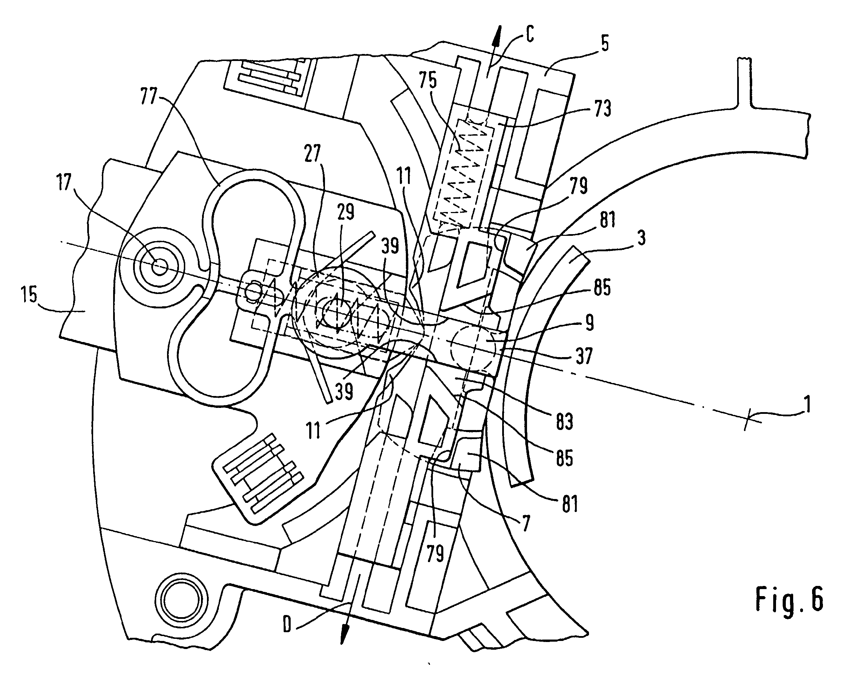

In Figur 6 ist ein viertes Ausführungsbeispiel in einer Draufsicht im Teilschnitt dargestellt. Dieses Ausführungsbeispiel unterscheidet sich von den vorherstehend erläuterten durch einen starren Stützarm 73, der in der Kulisse 5 verschiebbar und mittels der Feder 75 elastisch gelagert ist. Dabei wird der Stützarm 73 durch die Feder 75 in der in der Figur 6 gezeigten Stellung zentriert. Im mittleren Bereich weist der Stützarm 73 zwei Stützbereiche 79 auf, die an entsprechend gestaltenden Vorsprüngen 81 des Rastelementes 7 anliegen und dieses in der hier dargestellten Raststellung halten. Weiterhin weist der Stützarm 73 im mittleren Bereich eine Ausnehmung 83 auf, die seitlich durch Vorsprünge 85 begrenzt ist und durch die der Nocken mit seiner Spitze 37 hindurchgeführt ist.

Der Nocken 27 ist hier durch die am Blinkerhebel 15 angespritzte Feder 77 elastisch gelagert und Richtung auf die Lenksäule vorgespannt. Dabei herrscht keine Vorspannkraft in der Blinker-Nullstellung. Die Kraft ansteht erst beim Verschwenken des Blinkerhebels. Beim Verschwenken des Blinkerhebels 15 aus der hier dargestellten Grundstellung in die Blinkstellung wird der Nocken in der beschriebenen Weise in Richtung auf die Lenksäulenachse 1 ausgeschoben, sofern das Betätigungselement 3 nicht vor der Vorrichtung angeordnet ist, und gelangt damit in den Wirkbereich des Betätigungselementes 3. Dieses ergreift bei einer Drehung des Lenkrades den drehbeweglich am Zapfen 29 gelagerten Nocken 27 und verschwenkt ihn in Drehrichtung. Dabei kommen die Flanken 39 des Nockens 27 zur Anlage an den Vorsprung 85 des Stützarmes 73 und verschieben den Stützarm 73 je nach Lenkradbewegung entweder in Richtung des Pfeiles C oder des Pfeiles D. Hierdurch gelangt der der Drehrichtung entgegengesetzte Stützbereich 79 außer Eingriff mit dem auf dem Rastelement 7 angeordneten Vorsprung 81, so daß abhängig von der Stellung des Blinkerhebels 15 die Rückstellung in der oben ausführlich beschriebenen Weise erfolgt.

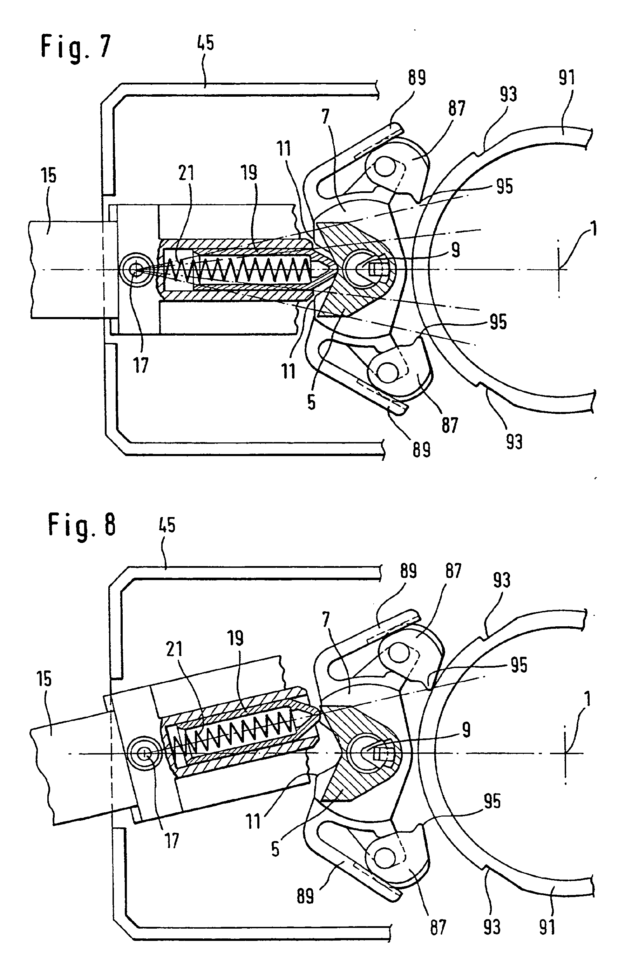

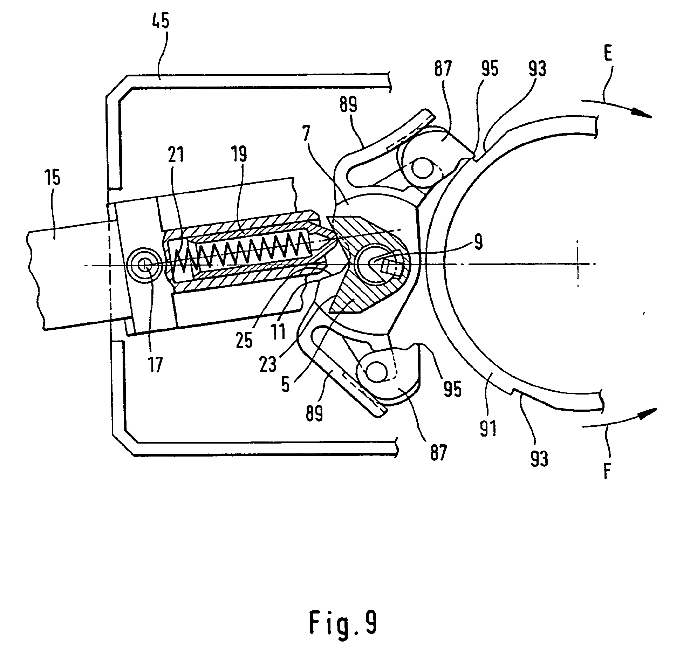

In den Figuren 7, 8 und 9 ist ein fünftes Ausführungsbeispiel im Teilschnitt in einer Draufsicht dargestellt. Anders als die vorhergehenden Ausführungsbeispiele weist dieses Ausführungsbeispiel zwei Nocken 87 auf. Zur Erläuterung der Wirkungsweise dieses Ausführungsbeispiels ist in Figur 7 die Grundstellung des Blinkerhebels 15 dargestellt, in Figur 8 eine Blinkstellung des Blinkhebels 15, und in Figur 9 die Rückstellung des Blinkerhebels 15.

Ebenso wie bei den vorhergehenden Figuren bzw. Ausführungsbeispielen sind auch hier gleiche Teile mit dem gleichen Bezugszeichen versehen. Die Nocken 87 sind jeweils drehbeweglich direkt am Rastelement 7 angeordnet, ebenso sind die auf sie einwirkenden Federarme 89 direkt am Rastelement 7 angeordnet. Das Betätigungselement ist hier als direkt an der Lenksäule 91 angeordnete Ausnehmungen 93 ausgebildet, wobei der Abstand der beiden Ausnehmungen 93 auf der Lenksäule 91 den Arbeitsbereich der Rückstellung festlegt. Die Ausnehmungen 93 wirken mit den Spitzen 95 der Nocken 87 zusammen, wenn der jeweilige Nocken 87 bei einer Betätigung des Blinkerhebels 15 zur Anlage an die Lenksäule 91 kommt.

Dieses ist in Figur 8 dargestellt. Dort ist der Blinkerhebel 15 aus der Grundstellung in eine Rast- bzw. Blinkstellung verschwenkt. Beim Verschwenken des Blinkerhebels 15 verschwenkt das Schaltstück 19 das drehbeweglich gelagerte Rastelement 7 und rastete hinter der Rastung 11 ein. Dabei kommt der dieser Raststellung zugeordnete Nocken 87, das heißt der an dieser Seite des Rastelements 7 drehbeweglich gelagerte Nocken 87 mit seiner Spitze 95 zur Anlage an der Lenksäule 91. Die durch die Federkraft der Feder 21 des Schaltstückes 19 über das Rastelement 7 gegen die Lenksäule 91 gedrückte Spitze 95 gelangt bei einer Drehung der Lenksäule 91 in die Ausnehmung 93 und wird von dieser je nach Drehrichtung mitgenommen. Dieses ist in Figur 9 dargestellt.

Hier ist die Lenksäule 91 bei in Blinkstellung befindlichem Blinkhebel 15 und damit an der Lenksäule 91 anliegendem Nocken 87 in Richtung des Pfeiles E rotiert. Die Spitze 95 des Nockens 87 wird dabei durch die entsprechend gestaltete Ausnehmung 93 mit in Richtung E gezogen, wobei wegen des exzentrisch am Rastelement 7 gelagerten Nockens 87 das Rastelement 7 weiter in Richtung auf die Lenksäule 91 geschwenkt wird. Dies hat zur Folge, daß die Rastung 11, die vorher bei an der Lenksäule 91 anliegendem Nocken 87 und bei in die Ausnehmung 93 gedrücktem Nocken 87 noch über die Kulissenkontur der Kulisse 5 hinausragte und so das Rasten des Schaltstückes 19 ermöglichte, hinter die Kontur der Kulisse 5 zurückgezogen wird und das Schaltstück 19 freigibt. Damit kann das Schaltstück 19 entlang der Kulisse 5 in die Grundstellung zurückgleiten, so daß der Blinkerhebel 15 in der beschriebenen Weise zurückgestellt wird. Gleichzeitig gelangt das Rastelement 7, wie ebenfalls oben ausführlich beschrieben, durch die Zentrierwirkung von Schaltstück 19, Kulissenkontur 23 und Rastelementkontur 25 in die Grundstellung, wobei zudem auch die exzentrisch gelagerten Nocken 87 durch die Federkraft der ausgelenkten Federarme 89 wieder in die Ausgangsstellung gedreht werden.

Bei einer Drehrichtung des Lenkrades 91 in Richtung des Pfeiles F würde die Rückstellung nicht aktiviert werden, da die Spitze 95 des Nockens 87 dann nicht von der entsprechend gestaltenden Ausnehmung 93 mitgezogen werden würde und folglich das Rastelement 7 nicht weiter verschwenkt werden würde, so daß die Rastung 11 weiterhin über die Kulissenkontur 23 hervorstehen und das Schaltstück 19 in der Blinkstellung halten würde.

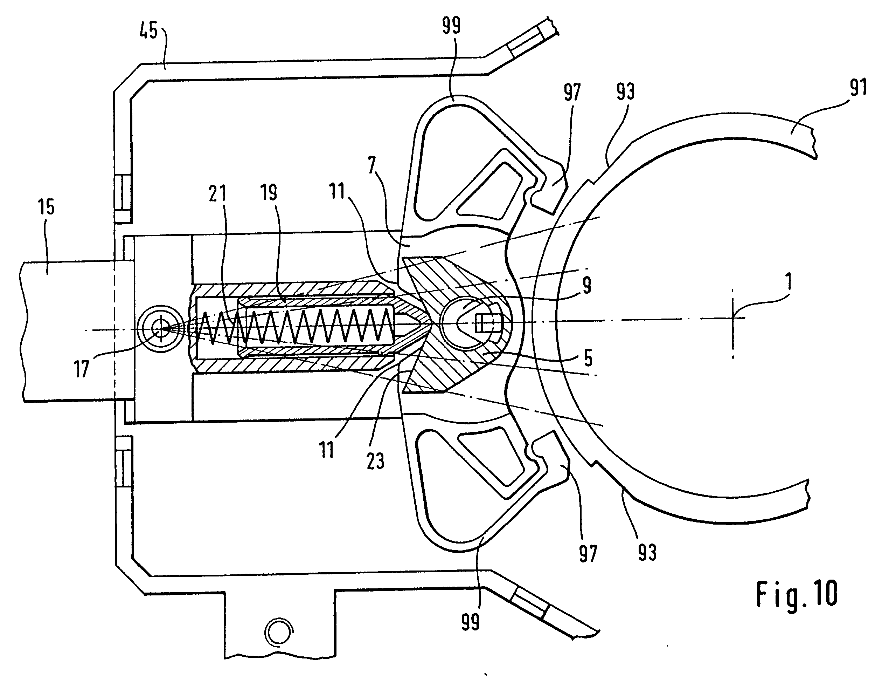

In der Figur 10 ist schließlich ein sechstes Ausführungsbeispiel in einem Teilschnitt in Draufsicht dargestellt, welches sich von dem fünften Ausführungsbeispiel der Figuren 7 bis 9 nur durch die Gestaltung der Nocken 97 unterscheidet. Diese sind hier als Haken ausgebildet, die über die Stützarme 99 federnd gelagert und direkt mit dem Rastelement 7 verbunden sind. Im übrigen entspricht die Funktion dieses Ausführungsbeispiels der vorhergehend beschriebenen, so daß auf eine erneute Erläuterung verzichtet wird.

## Patentansprüche

1. Verfahren zur drehrichtungsgekoppelten Rückstellung eines mit einem drehbaren Stellglied zusammenwirkenden Schalters, der einen mit einer Lenksäule (91) zusammenwirkenden Blinkerhebel (15) in einem Kraftfahrzeug aufweist, bei dem der Blinkerhebel (15) um eine Drehachse (17) aus der Grundstellung in eine Betriebsstellung geschwenkt wird, und dabei mit einem Ende entlang einer Kulisse (5) gleitet und an einer über die Kulissenkontur (23) hervorstehenden Rastung (11) durch diese in der Betriebsstellung gehalten wird, **dadurch gekennzeichnet, daß** die Rastung (11) zum Zurückstellen des Blinkerhebels (15) so bewegt wird, daß sie mindestens bündig mit der Kulissenkontur (23) abschließt und den Blinkerhebel (15) freigibt.

2. Verfahren nach Anspruch 1, **dadurch gekennzeichnet, daß** beim Schwenken des Blinkerhebels (15) in die Betriebsstellung ein Nocken (27, 87, 97) aus einer Ruhelage in Richtung auf die Lenksäule (91) verschoben wird.

3. Verfahren nach Anspruch 2, **dadurch gekennzeichnet, daß** der verschobene Nocken (27, 87, 97) mit einem an der Lenksäule (91) angeordneten Betätigungselement (3, 93) zusammenwirkt, und bei einer der Schwenkrichtung des Blinkerhebels (15) entgegengerichteten Drehbewegung der Lenksäule (91) einen die Rastung (11) in der Raststellung haltenden Stützarm (13, 49, 61, 63, 73, 89, 99) aus der Stützstellung bewegt, so daß die Rastung (11) bewegt und der Blinkerhebel (15) freigegeben werden kann, um zurück in die Grundstellung zu gelangen.

4. Verfahren nach Anspruch 3, **dadurch gekennzeichnet, daß** am zur Kulisse (5) gerichteten Ende des Blinkerhebels (15) eine in dessen Längsachse wirkende Kraft erzeugt wird, die die Rastung (11) bei wegbewegtem Stützarm (13, 49, 61, 63, 73, 89, 99) mindestens bündig auf die Kulissenkontur (23) drückt, so daß der Blinkerhebel (15) freigegeben wird, und den Blinkerhebel (15) entlang der Kulissenkontur (23) in die Grundstellung bewegt.

5. Vorrichtung zur drehrichtungsgekoppelten Rückstellung eines mit einem drehbaren Stellglied zusammenwirkenden Schalters, insbesondere eines mit einer Lenksäule (91) zusammenwirkenden Blinkerhebels (15) in einem Kraftfahrzeug, mit einem um eine Drehachse (17) schwenkbaren Blinkerhebel (15), wobei der Blinkerhebel (15) jeweils in eine von zwei, der gewünschten Blinkstellung entsprechende Betriebsstellung schwenkbar ist, einer ortsfest angeordneten Kulisse (5) zur Führung des Blinkerhebelendes, und zwei auf einem Rastelement (7) angeordneten Rastungen (11), die über die Kulissenkontur (23) hervorstehen und jeweils das Blinkerhebelende in einer Betriebsstellung halten, **dadurch gekennzeichnet, daß** das Rastelement (7) bewegbar ist, so daß jeweils eine Rastung (11) zumindest bündig mit der Kulissenkontur (23) abschließt und den in der Betriebsstellung gehaltenen Blinkerhebel (15) freigibt.

6. Vorrichtung nach Anspruch 5, **dadurch gekennzeichnet, daß** das Rastelement (7) drehbeweglich angeordnet ist.

7. Vorrichtung nach Anspruch 6, **dadurch gekennzeichnet, daß** zwei elastische Stützarme (13, 49, 61, 63, 89, 99) symmetrisch zum Drehpunkt (9) angeordnet sind und das Rastelement (7) in der Raststellung halten.

8. Vorrichtung nach Anspruch 5, **gekennzeichnet durch** mindestens einen Nocken (27, 87, 97), der beim Schwenken des Blinkerhebels (15) von der Grundstellung in eine Betriebsstellung in Richtung auf die Lenksäule (91) bewegbar ist.

9. Vorrichtung nach Anspruch 8, **dadurch gekennzeichnet, daß** der Nocken (27, 87, 97) elastisch und/oder drehbeweglich gelagert ist.

10. Vorrichtung nach einem der Ansprüche 5-9, **dadurch gekennzeichnet, daß** an der Lenksäule (91) mindestens ein Betätigungselement (3, 93) angeordnet ist, wobei das Betätigungselement (3, 93) mit dem Nocken (27, 87, 97) zusammenwirken kann.

11. Vorrichtung nach einem der Ansprüche 5-10, **dadurch gekennzeichnet, daß** am zur Kulisse (5) gerichteten Ende des Blinkerhebels (15) ein elastisch gelagertes Schaltstück (19) angeordnet ist.

## Claims

1. A method for rotational direction-coupled return to a neutral position of a switch, which cooperates with a rotatable final control element and which has a turn signal lever (15), cooperating with a steering column (91), in a motor vehicle, in which method the turn signal lever (15) is pivoted about a pivot shaft (17) out of the neutral position into an operating position, and in the process slides with one end along a sliding block (5) and is retained, at a detent (11) protruding past the sliding block contour (23), by this detent in the operating position, **characterized in that** for returning the turn signal lever (15), the detent (11) is moved such that it is at least flush with the sliding block contour (23) and releases the turn signal lever (15) .

2. The method as defined by claim 1, **characterized in that** upon pivoting of the turn signal lever (15) into the operating position, a cam (27, 87, 97) is displaced out of a position of repose in the direction of the steering column (91).

3. The method as defined by claim 2, **characterized in that** the displaced cam (27, 87, 97) cooperates with an actuating element (3, 93) located on the steering column (91), and upon a rotary motion of the steering column oriented counter to the pivoting motion of the turn signal lever (15) moves a support arm (13, 49, 61, 73, 89, 99), which keeps the detent (11) in the detent position, out of the support position, so that the detent (11) moves and the turn signal lever (15) can be released in order to return to the neutral position.

4. The method as defined by claim 3, **characterized in that** on the end of the turn signal lever (15) oriented toward the sliding block (5), a force acting in the longitudinal axis of the turn signal lever is generated which presses the detent (11), with the support arm (13, 49, 61, 73, 89, 99) moved away, at least in flush fashion onto the sliding block contour (23) so that the turn signal lever (15) is released, and which moves the turn signal lever (15) along the sliding block contour (23) into the neutral position.

5. A device for rotational direction-coupled return of a switch cooperating with a rotatable final control element, in particular a turn signal lever (15) cooperating with a steering column (91) in a motor vehicle, having a turn signal lever (15) which is pivotable about a pivot shaft (17), the turn signal lever (15) being pivotable into one of two operating positions that corresponds to corresponding to the desired turn signal position, having a stationary sliding block (5) for guiding the turn signal lever end, and having two detents (11), disposed on a detent element (7), which protrude past the sliding block contour (23) and which each keep the turn signal lever end in an operating position, **characterized in that** the detent element (7) is movable, so that one detent (11) at a time is at least flush with the sliding block contour (23) and releases the turn signal lever (15) that has been kept in the operating position.

6. The device as defined by claim 5, **characterized in that** the detent element (7) is disposed rotationally movably.

7. The device as defined by claim 6, **characterized in that** two elastic support arms (13, 49, 61, 73, 89, 99) are disposed symmetrically to the pivot point (9) and keep the detent element (7) in the detent position.

8. The device as defined by claim 5, **characterized by** at least one cam (27, 87, 97), which upon pivoting of the turn signal lever (15) from the neutral position into an operating position is movable in the direction of the steering column (91).

9. The device as defined by claim 8, **characterized in that** the cam (27, 87, 97) is supported elastically and/or rotationally movably.

10. The device as defined by one of claims 5 - 9, **characterized in that** at least one actuating element (3, 93) is disposed on the steering column (91), and the actuating element (3, 93) can cooperate with the cam (27, 87, 97).

11. The device as defined by one of claims 5 - 10, **characterized in that** an elastically supported contact member (19) is disposed on the end of the turn signal lever (15) oriented toward the sliding block (5).

## Revendications

1. Procédé de rappel couplé au sens de rotation d'un commutateur coopérant avec un actionneur rotatif qui comporte un levier de clignotant (15) coopérant avec une colonne de direction (91), dans un véhicule dans lequel le levier de clignotant (15) pivote autour d'un axe de rotation (17) d'une position de base dans une position de service, en glissant avec une extrémité le long d'une coulisse (5) et en étant maintenu en position de service par un cran (11) saillant au-dessus du contour de la coulisse (23), **caractérisé en ce que** pour le rappel du levier de clignotant (15), le cran (11) est déplacé de manière à se terminer au moins en affleurement avec le contour de la coulisse (23) et à libérer le levier de clignotant (15).

2. Procédé selon la revendication 1, **caractérisé en ce que** lors du basculement du levier de clignotant (15), une came (27, 87, 97) est déplacée dans le sens de la colonne de direction (91), d'une position de repos dans une position de service.

3. Procédé selon la revendication 2, **caractérisé en ce que** la came (27, 87, 97) déplacée coopère avec un élément d'actionnement (3, 93) disposé sur la colonne de direction (91) et que dans un sens de rotation de la colonne de direction (91) dirigé à l'encontre du sens de pivotement du levier de clignotant (15), un bras d'appui (13, 49, 61, 63, 73, 89, 99) maintenant le cran (11) dans sa position de crantage est déplacé de sa position d'appui, de sorte que le cran peut être déplacé et le levier de clignotant (15) libéré, afin de revenir à sa position de base.

4. Procédé selon la revendication 3, **caractérisé en ce que** lorsque le bras d'appui (13, 49, 61, 63, 73, 89, 99) est repoussé, sur l'extrémité du levier de clignotant (15) orientée vers la coulisse (5) est générée une force agissant sur l'axe longitudinal de celle-ci qui presse le cran (11) au moins en affleurement sur le contour de la coulisse (23), de sorte que le levier de clignotant (15) est libéré et que le levier de clignotant (15) est déplacé en position de base le long du contour de la coulisse (23).

5. Mécanisme pour le rappel couplé au sens de rotation d'un commutateur coopérant avec un actionneur rotatif qui comprend un levier de clignotant (15) coopérant avec une colonne de direction (91) dans un véhicule, avec un levier de clignotant (15) pivotant autour d'un axe de rotation (17), le levier de clignotant (15) pouvant pivoter respectivement dans l'une des deux positions de service correspondant à la position de clignotement souhaitée, avec une coulisse (5) montée fixement pour le guidage de l'extrémité du levier de clignotant et deux crans (11) disposés sur un élément de crantage (7) saillants au-dessus du contour de la coulisse (23) et maintenant respectivement l'extrémité du clignotant dans une position de service, **caractérisé en ce que** l'élément de crantage (7) est déplaçable de manière à ce que chaque cran (11) se termine au moins en affleurement avec le contour de la coulisse (23) et libère le levier de clignotant (15).

6. Mécanisme selon la revendication 5, **caractérisé en ce que** l'élément de crantage (7) est disposé de manière rotative.

7. Mécanisme selon la revendication 6, **caractérisé en ce que** deux bras d'appui (13, 49, 61, 63, 89, 99) flexibles sont disposés symétriquement par rapport au point de rotation (9) et maintiennent l'élément de crantage (7) dans sa position de crantage.

8. Mécanisme selon la revendication 5, **caractérisé en** au moins une came (27, 87, 97) qui lorsque le levier de clignotant (15) bascule, est déplacée dans le sens de la colonne de direction (91), d'une position de base dans une position de service.

9. Mécanisme selon la revendication 8, **caractérisé en ce que** la came (27, 87, 97) est montée de manière flexible et/ou en rotation.

10. Mécanisme selon l'une quelconque des revendications 5 à 9, **caractérisé en ce qu'**au moins un élément d'actionnement (3, 93) est disposé sur la colonne de direction (91), l'élément d'actionnement (3, 93) pouvant coopérer avec la came (27, 87, 97).

11. Mécanisme selon l'une quelconque des revendications 5 à 10, **caractérisé en ce qu'**un élément de commutation (19) est monté de manière flexible sur l'extrémité du levier de clignotant (15) orientée vers la coulisse (5).
